(19) Europäisches Patentamt
European Patent Office
Office européen des brevets

(11) EP 0 881 271 B1

(12) # EUROPÄISCHE PATENTSCHRIFT

(45) Veröffentlichungstag und Bekanntmachung des Hinweises auf die Patenterteilung:
**26.03.2003 Patentblatt 2003/13**

(51) Int Cl.$^7$: **C09J 4/06**, C09J 133/06

(21) Anmeldenummer: **98108230.8**

(22) Anmeldetag: **06.05.1998**

(54) **Schwingungsdämpfende, hitzebeständige, druckempfindliche Acrylatklebstoffzusammensetzung sowie ein daraus hergestelltes Haftklebeband**

Vibration absorbing, heat resistant, pressure sensitive acrylic adhesive composition and the adhesive tape made from it

Composition d'adhésif acrylique absorbant de vibration, résistant à la chaleur et sensible à la pression et bande adhésive qui en est produite

(84) Benannte Vertragsstaaten:
**AT BE CH DE DK ES FI FR GB GR IE IT LI LU NL PT SE**
Benannte Erstreckungsstaaten:
**SI**

(30) Priorität: **26.05.1997 DE 19721846**

(43) Veröffentlichungstag der Anmeldung:
**02.12.1998 Patentblatt 1998/49**

(73) Patentinhaber: **Lohmann GmbH & Co. KG**
**56567 Neuwied (DE)**

(72) Erfinder:
- **Pahl, Andreas, Dr.**
  **56567 Neuwied (DE)**
- **Domanski, Reinhold**
  **56566 Neuwied (DE)**

(74) Vertreter: **Flaccus, Rolf-Dieter, Dr.**
**Patentanwalt**
**Bussardweg 10**
**50389 Wesseling (DE)**

(56) Entgegenhaltungen:
**WO-A-93/22391** **WO-A-96/18701**

EP 0 881 271 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft eine schwingungsdämpfende, hochtemperaturbeständige und druckempfindliche Klebstoffzusammensetzung sowie daraus hergestellte Haftklebebänder.

Als Haftklebstoff wird eine Klebstoffart bezeichnet, die in trockenem (lösemittelfreien) Zustand bei Zimmertemperatur dauerhaft klebrig ist und bei direktem Kontakt auf einer Vielzahl von verschiedenen Oberflächen haftet, wobei durch Andrücken an die Oberfläche der zu verklebenden Fügeteile eine Benetzung herbeigeführt wird, die ausreichende Haftungskräfte ergibt. Die Anwendung dieser Haftklebestoffe ist weit verbreitet. Sie werden bevorzugt zur Herstellung von diversen selbstklebenden Artikeln eingesetzt, z.B. für Klebebänder und Folien, Selbstklebeetiketten, Pflaster, Briefmarken, u.ä. Der Stand der Technik auf dem Gebiet des Haftklebens wird z.B. in Donatas Satas (ed.), Handbook of Pressure sensitive adhesive Technology, Verlag van Nostrand Reinhold, New York, 1989, wiedergegeben.

Als Schwingungen wird ein zeitlich periodischer oder zyklischer Vorgang, das heißt ein Vorgang, der in einem Zeitintervall (Periodendauer) jeweils wieder die gleiche Phase hat, bezeichnet. Der Kehrwert der Periodendauer heißt (Perioden-)Frequenz der Schwingung. Bei der mechanischen Schwingung sind die Ortskoordinaten, Druck oder Dichte die Schwingungsgrößen. Wird einem schwingendem System (Oszillator) Energie entzogen, führt es eine gedämpfte Schwingung aus, das heißt eine Schwingung mit immer kleiner werdender Amplitude.

Schwingungen sind in nahezu allen materiellen Systemen möglich und häufig unerwünscht. Unerwünschte Schwingungen können durch konstruktive Maßnahmen, vor allem Dämpfung und Beeinflussung der Lage von Eigenfrequenzen minimiert werden. Schwingungsdämpfer sind Vorrichtungen, die schwingenden mechanischen Systemen Energie entziehen (durch Reibung, Strömungsverluste, Wirbelströme, u.ä.) und so die Schwingungsamplituden verringern. In Gummischwingungsdämpfern wird Schwingungsenergie durch innere Reibung in Wärme umgesetzt. Flüssigkeitsschwingungsdämpfer (hydraulische Schwingungsdämpfer) wirken durch Erzeugung von Scherspannungen in Öl oder durch Verdrängung von Öl durch Drosselstellen; auch dabei wird Schwingungsenergie in Wärme umgesetzt. In Verbrennungsmotoren werden Schwingungsdämpfer vor allem zur Dämpfung der Drehschwingungen von Kurbelwellen eingesetzt, ebenso in Meßgeräten zur Dämpfung von Zeigerschwingungen.

Unter den schwingungsdämpfenden Materialien sind auch Klebstoffe weit verbreitet, z.B. bei Automobilteilen und zahlreichen Anwendungen, bei denen die Geräuschreduzierung eine Rolle spielt. Viele Untersuchungen sind durchgeführt worden, um die Abhängigkeit der schwingungsdämpfenden Eigenschaften von der Temperatur zu ermitteln und die besten Bedingungen bei der Arbeitstemperatur herauszufinden. Es ist in vielen Anwendungsfällen wünschenswert, daß die Dämpfung über eine weiteren Temperaturbereich, z.B. -50°C bis +200°C, und einen breiten Frequenzbereich von z.B. 0,1-5 Hz erhalten bleibt. Diese Frequenz entspricht in etwa derjenigen, die durch seismische Schwingungen oder starke Winde an hohen Gebäuden entstehen. Höhere Frequenzen von etwa 1 kHz entstehen beispielsweise an Computerlaufwerken, noch höhere von 5-10 kHz werden bei schnell drehenden Anwendungen wie z.B. Kurbelwellen beobachtet. Die Anforderungen an schwingungsdämpfende Klebstoffe sind in den letzten Jahren immer mehr gewachsen. So muß der Klebstoff oft Hochtemperatur- und chemische Beständigkeit aufweisen und zugleich viskoelastische Eigenschaften mit einem relativ niedrigen Elastizitätsmodul bei hohem Verlustfaktor haben. Diese Werte können beispielsweise im Torsionsschwingungsversuch (DIN 53445) oder nach DIN 53457 experimentell ermittelt werden. Das elastische Verhalten der Klebschichten unterhalb der Glasübergangstemperatur führt dazu, daß bei einer mechanischen Belastung, wie sie im Torsionsschwingungsversuch erfolgt, diese Energie nicht zu Wärme umgewandelt wird und somit in diesem Bereich praktisch auch keine Dämpfung auftritt. Oberhalb der Glasübergangstemperatur absorbiert die Probe den größten Teil der Energie und die Dämpfung ist hoch.

Die US 3 983 297 beschreibt einen druckempfindlichen Haftklebstoff, enthaltend ein Copolymer aus 94-98 Mol-% Alkylacrylaten, 2-6 Mol-% (Meth)acrylsäure und 0,002-0,05 Mol-% internem Vernetzer. Die EP 0 147 067 beschreibt im Beispiel 2 ein Copolymer aus 90 Teilen 2 Ethylhexylacrylat und 10 Teilen Methacrylsäure. Das nicht vernetzte Copolymer wird als Haftklebstoff verwendet. Beide Patente beschreiben Haftklebstoffe mit schwingungsdämpfenden Eigenschaften. Die Haftklebstoffe dieses Typs zersetzen sich oder oxidieren jedoch bei Langzeit- oder Hochtemperaturanwendung, was verschiedene Probleme mit sich bringt. Die Zersetzung oder Oxidation des hochpolymeren Materials führt zur Aushärtung und damit zum Verlust der schwingungsdämpfenden und Adhäsionseigenschaften. Bei der Zersetzung entstehen darüber hinaus bedenkliche Anteile an flüchtigen Gasen, die die Umgebung belasten.

Die WO 92/20752 beschreibt ein Gemisch, bestehend aus einem lösemittelbefreiten Silikonhaftklebstoff und Acrylatmonomeren sowie Fotoinitiator und Fotovernetzer auf Triazinbasis mit anschließender Beschichtung auf einen Träger und UV-Bestrahlung. Die EP 0 542 201 beschreibt ein UV-Prepolymerisat auf Acrylatbasis, das mit einem Antioxidans und Reaktivverdünnern gemischt und anschließend auf einen Träger beschichtet und UV-bestrahlt wird. Beide Verfahren sind technisch aufwendig und auch von der Rohstoffseite her kostenintensiv. Darüber hinaus wurden bei der EP 0 542 201 die schwingungsdämpfenden Eigenschaften nur bei 60°C angegeben und nicht für einen breiten Temperaturbereich.

Ausgehend von diesem Stand der Technik liegt der Erfindung die Aufgabe zugrunde, Haftklebstoffe und Haftklebebänder für die genannten Anwendungen anzugeben, bei denen diese einerseits als aggressive Haftklebstoffe

die zu verbindenden Teile zu fixieren vermögen und andererseits trotzdem im geklebten Zustand hochtemperaturstabil sind und über einen weiten Temperaturanwendungsbereich schwingungsdämpfende Eigenschaften besitzen. Außerdem sollen diese druckempfindlichen Klebstoffe und Klebebandsysteme auf konventionellen Anlagen kostengünstig herzustellen sein.

Zur Lösung dieser Aufgabe wird mit der Erfindung bei einer Klebstoffzusammensetzung der im Oberbegriff von Anspruch 1 gekennzeichneten Art vorgeschlagen, daß sie im wesentlichen ein Gemisch aufweist, enthaltend ein Copolymerisat aus (Meth)acrylsäurederivaten, das primäre und sekundäre oder sekundäre Amino- und/oder Amidgruppen enthält und mit mindestens einem Bismaleinimid als Nachrernetzer versetzt ist.

Weitere vorteilhafte Ausgestaltungen der Klebstoffzusammensetzung sind entsprechend den Unteransprüchen vorgesehen.

Bei der erfindungsgemäßen Klebstoffzusammensetzung wird eine einfache Handhabung dadurch ermöglicht, daß sie aus einem oder mehreren Copoly(meth)acrylaten, enthaltend primäre und/oder sekundäre Amino- und/oder Amidgruppen, besteht, die durch die Verwendung von Bismaleinimiden als latente Härter für Copolyacrylate nachvernetzt werden können. Die Aushärtung erfolgt durch thermische Energiezufuhr, wobei sich überraschenderweise starke und dauerhafte Klebungen ausbilden, die über einen weiten Temperaturbereich schwingungsdämpfende Eigenschaften haben und sich auch bei hoher Temperatur nicht zersetzen. Die Aushärtung erfolgt vorteilhafterweise in der Klebefuge. Zur Herstellung des Klebebandes kann daher zusätzlich ein konventioneller Vernetzer enthalten sein.

Die Copolyacrylate werden auf dem üblichen Wege durch Emulsionspolymerisation oder Lösemittelpolymerisation hergestellt, wobei der Einbau von Amino- oder Amidgruppen dadurch herbeigeführt wird, daß ethylenisch ungesättigte Monomere, die Amino- oder Amidgruppen enthalten, für die Copolymerisation verwendet werden. Diese Amino- oder Amidgruppen müssen azide Wasserstoffatome besitzen, so daß nur sekundäre und primäre Amino- oder Amidgruppen infrage kommen. Typische Beispiele für einsetzbare Monomere sind daher Acrylamid, N-Methylacrylamid, N-Octylacrylamid, 2-Aminoethyl-acrylamid und Ethylimidazolidonmethacrylat, bevorzugt ist Acrylamid.

Bismaleinimide haben z.B. Verwendung gefunden in Zubereitungen mit Polyolefinen, Polyurethanen und Polyamiden. So wird z.B. m-Phenylen-bismaleinimid als Härter für chlorsulfoniertes Polyethylen (Hypalon) und Neopren eingesetzt. Die Modifizierung von Polyamidformmassen aus Polyamid 6.10 mit Bismaleinimiden wird von A. T. Voloschin et al., Zh. Prikl. Khim. (Leningrad) 60 (1987) 7, 1607-1610, beschrieben. Dabei wird als Reaktionsmechanismus eine Michael-Addition diskutiert, das heißt die Addition von Amino- und/oder Amidgruppen an die Maleinimiddoppelbindung. Der weitere Stand der Technik ergibt sich beispielsweise aus H.G. Ruppe, I.C. Dupuis, "HVA-2", Firmenschrift der Fa. Du Pont.

Die US 4,037,018 beschreibt in Beispiel 6 eine Dispersion, die ketiminmodifiziertes Copoly(meth)acrylatharz und o-Phenylenbismaleinimid enthält. Das Gemisch wird verwendet zur Beschichtung und Lackierung von Metallblechen durch elektrostatische Abscheidung, wobei harte, flexible Coatings entstehen. Die Formulierung hat jedoch keine haftklebenden Eigenschaften und ist aufgrund ihrer Zusammensetzung nicht geeignet, über einen weiten Temperaturbereich schwingungsdämpfend zu wirken.

Die DE 42 05 860 beschreibt Schmelzklebstoffe auf Basis aminterminierter Copolyamide und Bismaleinimide, die als Reaktivkleber und Reaktivbeschichtungsmittel verwendet werden. Die Formulierungen sind jedoch nicht geeignet, die Aufgabe gemäß der vorliegenden Erfindung zu lösen und führen auch nicht zu Haftklebstoffen.

Als Bismaleinimide werden erfindungsgemäß Verbindungen der allgemeinen Formel verwendet, wie sie beispielsweise in der DE 42 05 860 beschrieben sind:

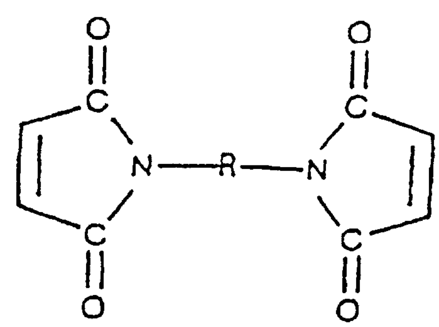

worin R eine der folgenden Gruppen sein kann:

- gradkettige, verzweigte und/oder cycloaliphatische Alkylenreste mit 2-20 Kohlenstoffatomen;
- aromatische oder aromatisch/aliphatische oder aromatisch/cycloaliphatische Kohlenwasserstoffreste mit 6-50

Kohlenstoffatomen;

- Polyoxyalkylengruppen der Formeln I-IV:

Formel I:

$$—[(CH_2)_aO]_b—(CH_2)_a—$$

in der a 2-4 und b 1-100 sein kann oder

**Formel II:**

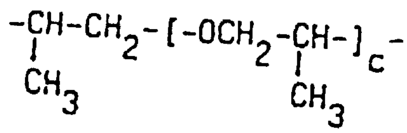

in der c 2-70 sein kann oder

**Formel III:**

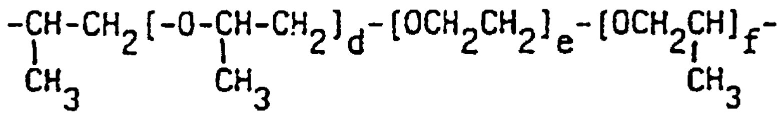

in der die Summe (d + f) 2 oder 3 und e 8-140 sein kann oder

**Formel IV:**

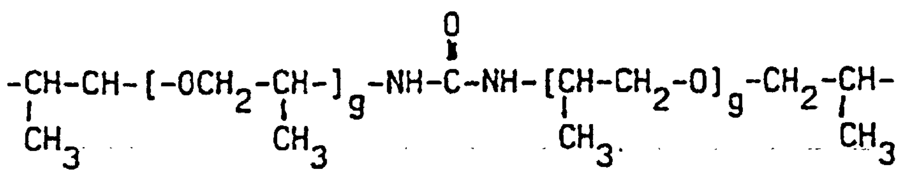

in der g 2-70 sein kann.

Aromatische oder aromatisch/aliphatische oder aromatisch/cycloaliphatische Kohlenwasserstoffreste mit 6-50 Kohlenstoffatomen sind besonders bevorzugt aus der Gruppe ausgewählt, die aus 4,4'-Diphenylmethan-, 4,4'-Diphenylpropan-, 4,4'-Diphenylsulfon-, 4,4'-Diphenylether-, 2,4-Toluylen-, 1,3-Phenylen-, 1,4-Phenylenresten sowie Indanderivaten wie z.B. 6-Maleinimid-1-(4'-maleinimidphenyl)-1,3,3-trimethylindan besteht. Besonders bevorzugt ist die Verwendung von 4,4'-Diphenylmethanbismaleinimid (Matrimid 5292 A, Handelsprodukt der Fa. Ciba-Geigy) sowie von m-Phenylenbismaleinimid (HVA2, Handelsprodukt der Fa. DU Pont). Die Bismaleinimide können aber auch nach S. Takeda, H. Akiyama, H.Kagiuchi, J.Appl.Pol.Sci.35, 1341 (1988), hergestellt werden. Die dafür gegebenenfalls notwendigen Polyoxyalkylendiamine können unter der Bezeichnung Jeffamine® (Huntsman Corp.) bezogen werden. Das Gemisch gemäß der Erfindung kann in bekannter Weise in Form von wäßrigen Dispersionen, in Lösung oder als Schmelzhaftklebstoff verwendet werden.

Das Gemisch gemäß der Erfindung kann neben den Copoly(meth)acrylaten und Bismaleinimiden je nach Anwendungsbereich weitere übliche Zusätze, z.B. Verarbeitungshilfsmittel, Farbstoffe, Antioxidantien, flammhemmende Stoffe, Klebharze und weitere Vernetzersysteme für Copoly(meth)acrylate enthalten. Dem Fachmann ist eine große Anzahl solcher Stoffe, die als Handelsprodukte erhältlich sind, bekannt.

Die als Dispersion, Lösemittelklebstoff oder Schmelzhaftklebstoff anfallenden erfindungsgemäßen Gemische können auf bekannten Maschinen- und Anlagensystemen auf bahnförmige Materialien, wie z.B. Kunststoffolien oder

Papiere beschichtet werden und in an sich bekannter Weise zu Haftklebebändern verarbeitet werden. Diese so hergestellten Haftklebebänder mit Nachvernetzungspotential sind lagerstabil und versandfähig, können später mit den gewünschten Substraten verklebt werden und in der Klebung durch thermische Energiezufuhr nachvernetzt werden. Die Nachvernetzung führt zu dauerhaften, schwingungsdämpfenden, hochtemperaturbeständigen sowie lösemittelresistenten Klebungen.

Beispiel für Eigenschaftsprüfungen:

Der dynamische Schälwiderstand einer Probe wird in Anlehnung an AFERA 4001 geprüft und ist in N/25 $mm^2$ angegeben. Dazu wird der Klebestreifen mittels einer Metallwalze unter Belastung von 2 kg/cm auf eine AFERA-Stahlplatte kaschiert. Mit einer Prüfgeschwindigkeit von 300 mm/min und einem Winkel von 180° wird die Probe von der Prüffläche durch eine Zugprüfmaschine abgezogen. Im Fall der Lagerungstests in Flüssigkeiten wird die Schälfestigkeit nach einer Rekonditionierungszeit von 1 h gemessen.

Die statische Scherfestigkeit wird nach FINAT 8 ermittelt. Die Belastung beträgt 1 kg/6,25 $cm^2$. Angegeben ist die Haltezeit in Minuten.

Die Zugscherfestigkeit wird in Anlehnung an ISO 4587 bzw. DIN EN 1465 bestimmt. Dazu werden Überlappungsklebungen mit INOX-Stahlblechen bei einer Prüffläche von 312,5 $mm^2$ (Breite: 25 mm, Länge: 12,5 mm) hergestellt. Die so geklebten Fügeteile werden 10 min bei 160°C unter einem Druck von 6 bar gelagert. Die Zugscherfestigkeit wird sodann mittels einer Zugprüfmaschine bei einer Prüfgeschwindigkeit von 5 m/min bestimmt. Daneben wird auch die Steigung der Kraft-Weg-Kurve an der Stelle $F_{max}$ (Bruch) errechnet.

Zur Bestimmung der Vibrationsdämpfung wird auf der Stahlplatte mit den Abmessungen 110 mm x 60 mm x 5 mm das zu untersuchende Klebeband appliziert. Das Klebeband ist mittig ausgestanzt, so daß ein Beschleunigungsaufnehmer direkt auf der Stahlplatte eingeschraubt werden kann. Der so vorbereitete Probekörper wird in einer Klimakammer auf einer schwingungsisolierenden Matte (z.B. feuerfeste Glaswolle) positioniert. Die Anregung erfolgt mittig mit einem Impulshammer. Die Frequenzanalyse zeigt drei Eigenfrequenzen bei etwa 2,7 kHz, 7 kHz und 11,5 kHz. Ein Modalanalyseprogramm oder eine entsprechende Rechenoperation (3 dB-Punkt) liefert die dazugehörigen Dämpfungen in Prozent. Die Messungen werden in Temperatursprüngen von 25°C ausgehend von 0°C bis 150°C wiederholt, wobei die Temperaturangaben für die Prüfplatte gelten.

Verwendete Bezeichnungen und Abkürzungen:

| | |
|---|---|
| EHA = | 2-Ethylhexylacrylat |
| AA = | Acrylsäure |
| AAM = | Acrylamid |
| NMAM = | N-Methylacrylamid |
| MMA = | Methylmethacrylat |
| EIOM = | Ethylimidazolidonmethacrylat (Norsocryl 104, Handelsprodukt der Fa. Elf Atochem) |
| HVA-2 = | m-Phenylenbismaleinimid (Handelsproukt der Fa. Du Pont) |
| Matrimid = | Matrimid 5292 A (4,4' Diphenylmethanbismaleinimid, Handelsprodukt der Fa. Ciba Geigy) |
| HMBM = | Hexamethylenbismaleinimid |
| TiACA = | Tilcom PI 3 (Titanchelatvernetzer, Handelsprodukt der Fa. Tilcom) |
| AIBN = | Azoisobutyronitril |

Beispiel für die Herstellung einer erfindungsgemäßen Haftklebstoffzusammensetzung:

Ethylacetat und n-Hexan werden einem Reaktor vorgelegt. Die Monomeren werden in einen Rundkolben eingewogen und gemischt. In einem zweiten Rundkolben wird die Starterlösung, bestehend aus AIBN (Vazo 64) und Ethylacetat hergestellt. Starterlösung und Monomerengemisch werden gemischt und in einen Tropftrichter eingefüllt. Der Reaktor wird bis auf Siedetemperatur aufgeheizt. Nach Erreichen der Siedetemperatur werden 10% der Mischlösung (Monomerengemisch + Starterlösung) zugegeben. Anschließend wird der Reaktionsbeginn abgewartet (Rückfluß). Nach Reaktionsbeginn wird die restliche Monomer- und Starterlösung innerhalb von 120 min zudosiert. Anschließend läßt man noch 180 min rühren. Nachdem der Reaktor auf unter 60°C abgekühlt ist, wird mit Isopropanol auf einen theoretischen Feststoffgehalt von ca. 40-45% verdünnt.

Das so hergestellte Basispolymerisat wird zum erfindungsgemäßen nachvernetzbaren Haftklebstoffgemisch verarbeitet, indem die jeweilige Menge Bismaleinimid in Aceton und/oder Titanacetylacetonat in Isopropanol zugegeben und anschließend noch 5 min gerührt wird. Das so hergestellte Gemisch hat einen Feststoffgehalt von ca. 30%.

**Beispiele:**

| Nummer | Zusammensetzung | TiACA (%) | Bismaleinimid |
|---|---|---|---|
| V1 | EHA/AA/AAM = 80/5/15 | 0,1 | -- |
| V2 | EHA/AA = 90/10 | 0,1 | 2% HVA-2 |
| 1 | EHA/AA/AAM = 80/5/15 | 0,1 | 2% HVA-2 |
| 2 | " | 0,15 | 3% HVA-2 |
| 3 | EHA/AA/NMAM = 80/10/10 | 0,1 | 2% Matrimid |
| 4 | " | 0,15 | 3% Matrimid |
| 5 | EHA/MMA/AA/EIOM = 60/20/10/10 | 0,1 | 2% Matrimid |
| 6 | EHA/AA/AAM = 75/10/15 | 0,05 | 2% HMBM |
| 7 | " | 0,1 | 5% HMBM |
| 8 | " | 0 | 3% Matrimid |
| 9 | " | 0,1 | 2% Matrimid |
| 10 | " | 0,15 | 2% Matrimid |

Beispiel für die Herstellung erfindungsgemäßer Haftklebebänder:

Die vorgenannten Haftklebstofformulierungen 1-10 sowie Vergleichsbeispiele V1 und V2 werden auf einer konventionellen Lösemittelbeschichtungsanlage zu Transferklebebändern verarbeitet. Das Auftragsgewicht beträgt 100 $g/m^2$.

Beispiele für Eigenschaften der hergestellten Haftklebebänder:

Die Ergebnisse veranschaulichen die sehr guten Adhäsions-, Kohäsions- und Dämpfungseigenschaften der erfindungsgemäßen Formulierungen 1-10 bzw. der daraus hergestellten Transferklebebänder, auch nach Lagerung in Prüfflüssigkeiten, im Unterschied zu den Vergleichsbeispielen.

1. Dynamischer Schälwiderstand (N/25 mm)

| Nr. | | Vernetzungs-bedingungen | 10 min 23 °C | 2 h Brems-flüssigkeit (DOT 4) | 2 h Prüf-benzin | 2 h Salz- lauge |
|---|---|---|---|---|---|---|
| V1 | vor Vernetzung | | 12 | 16 | 15 | 16 |
| | nach Vernetzung | 10 min 160 °C | 19 | 18 | 14 | 16 |
| V2 | vor Vernetzung | | 10 | 12 | 11 | 11 |
| | nach Vernetzung | 10 min 160°C | 18 | 19 | 19 | 19 |
| 1 | vor Vernetzung | | 12 | 20 | 19 | 21 |
| | nach Vernetzung | 10 min 160 °C | 23 | 33 | 32 | 34 |
| 2 | vor Vernetzung | | 9 | 22 | 23 | 22 |

(fortgesetzt)

| Nr. | | Vernetzungs-bedingungen | 10 min 23 °C | 2 h Brems-flüssigkeit (DOT 4) | 2 h Prüf-benzin | 2 h Salz- lauge |
|---|---|---|---|---|---|---|
| | nach Vernetzung | 10 min 160 °C | 25 | 31 | 33 | 32 |
| 3 | vor Vernetzung | | 12 | 24 | 24 | 25 |
| | nach Vernetzung | 20 min 160 °C | 24 | 35 | 37 | 36 |
| 4 | vor Vernetzung | | 8 | 21 | 19 | 23 |
| | nach Vernetzung | 15 min 160 °C | 25 | 37 | 38 | 36 |
| 5 | vor Vernetzung | | 12 | 25 | 26 | 26 |
| | nach Vernetzung | 30 min 170 °C | 27 | 38 | 39 | 37 |
| 6 | vor Vernetzung | | 15 | 19 | 18 | 18 |
| | nach Vernetzung | 10 min 160 °C | 28 | 39 | 39 | 41 |
| 7 | vor Vernetzung | | 12 | 26 | 28 | 27 |
| | nach Vernetzung | 10 min 160 °C | 30 | 41 | 43 | 44 |
| 8 | vor Vernetzung | | 31 | 17 | 15 | 15 |
| | nach Vernetzung | 10 min 160 °C | 34 | 41 | 39 | 40 |
| 9 | vor Vernetzung | | 11 | 15 | 11 | 13 |
| | nach Vernetzung | 10 min 160 °C | 31 | 35 | 34 | 37 |
| 10 | vor Vernetzung | | 9 | 23 | 22 | 21 |
| | nach Vernetzung | 10 min 160 °C | 23 | 39 | 39 | 38 |

**2. Statische Scherfestigkeit nach Finat 8 (min)**

| Nr. | Lagerung | Haltezeit [min] |
|---|---|---|
| V1 | 23 °C | 15.000 |
| | 190 °C | 10.000 |
| V2 | 23 °C | 13.000 |
| | 190 °C | 12.000 |
| 1 | 23 °C | 15.000 |
| | 190 °C | 15.000 |
| 2 | 23 °C | 15.000 |
| | 190 °C | 15.000 |
| 3 | 23 °C | 15.000 |
| | 190 °C | 13.000 |

(fortgesetzt)

| Nr. | Lagerung | Haltezeit [min] |
|---|---|---|
| 4 | 23 °C | 18.000 |
| | 190 °C | 15.000 |
| 5 | 23 °C | 15.000 |
| | 190 °C | 15.000 |
| 6 | 23 °C | 20.000 |
| | 190 °C | 15.000 |
| 7 | 23 °C | 20.000 |
| | 190 °C | 15.000 |
| 8 | 23 °C | 6.000 |
| | 190 °C | 10.000 |
| 9 | 23 °C | 15.000 |
| | 190 °C | 15.000 |
| 10 | 23 °C | 15.000 |
| | 190 °C | 16.000 |

3. Zugscherfestigkeit von Überlappungsklebungen in Anlehnung an ISO 4587 [N/312,5 $mm^2$]

| Nr. | Lagerung | Zugscherfestigkeit [N/312,5 $mm^2$] | Steigung [N/ $mm^2$] |
|---|---|---|---|
| V1 | 10 min/RT/6 bar<br>10 min/160 °C/6 bar | 362<br>338 | 309<br>379 |
| V2 | 10 min/RT/6 bar<br>10 min/160 °C/6 bar | 321<br>334 | 300<br>395 |
| 1 | 10 min/RT/6 bar<br>10 min/160 °C/6 bar | 381<br>569 | 366<br>700 |
| 2 | 10 min/RT/6 bar<br>10 min/160 °C/6 bar | 360<br>586 | 345<br>699 |
| 3 | 10 min/RT/6 bar<br>10 min/160 °C/6 bar | 372<br>602 | 340<br>677 |
| 4 | 10 min/RT/6 bar<br>10 min/160°C/6 bar | 344<br>598 | 321<br>702 |
| 5 | 10 min/RT/6 bar<br>10 min/160 °C/6 bar | 354<br>613 | 334<br>689 |
| 6 | 10 min/RT/6 bar | 330 | 318 |

(fortgesetzt)

| Nr. | Lagerung | Zugscherfestigkeit [N/312,5 mm²] | Steigung [N/mm²] |
|---|---|---|---|
| | 10 min/160 °C/6 bar | 588 | 721 |
| 7 | 10 min/RT/6 bar<br>10 min/160 °C/6 bar | 343<br>587 | 334<br>705 |
| 8 | 10 min/RT/6 bar<br>10 min/160 °C/6 bar | 105<br>534 | 89<br>698 |
| 9 | 10 min/RT/6 bar<br>10 min/160 °C/6 bar | 321<br>547 | 305<br>688 |
| 10 | 10 mindRT/6 bar<br>10 min/160 °C/6 bar | 390<br>615 | 318<br>717 |

4.Graphische Darstellung des vibrationsdämpfenden Verhaltens in Figur 1 und 2

**Patentansprüche**

1. Druckempfindliche, hochtemperaturbeständige und schwingungsdämpfende, thermisch nachvernetzbare Klebstoffzusammensetzung, **dadurch gekennzeichnet, daß** sie im wesentlichen aus einem Gemisch eines Copolymerisats aus (Meth)acrylsäurederivaten, das primäre und/oder sekundäre Amino- und/oder Amidgruppen enthält, und mindestens einem Bismaleinimid als Nachrernetzer besteht.

2. Klebstoffzusammensetzung nach Anspruch 1, **dadurch gekennzeichnet, dass** das Copolymerisat als comonomere (Meth)acrylsäurederivate mit primären und/oder mit sekundären Amino- bzw. Amidgruppen enthält.

3. Klebstoffzusammensetzung nach Anspruch 1 oder 2, **dadurch gekennzeichnet, dass** der Anteil der stickstofftragenden Comonomeren, bezogen auf das Copolymerisat, 1 bis 30 Gew.-% beträgt.

4. Klebstoffzusammensetzung nach Anspruch 3, **dadurch gekennzeichnet, dass** der Anteil an stickstofftragenden Comoneren 10 bis 15 Gew.-%, bezogen auf das Copolymerisat, beträgt.

5. Klebstoffzusammensetzung nach einem oder mehreren der Ansprüche 1 bis 4, **gekennzeichnet durch** ein Bismaleinimid der allgemeinen Formel

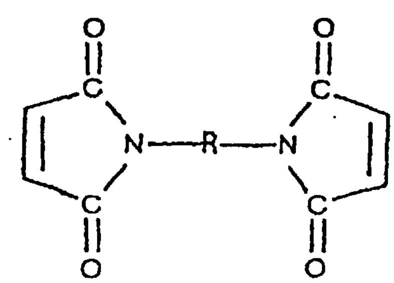

wobei R eine der folgenden Gruppen sein kann:

- geradkettige, verzweigte und/oder cycloaliphatische Alkylreste mit 2 bis 20 Kohlenstoffatomen;
- aromatische oder aromatisch/aliphatische oder aromatisch/cycloaliphatische Kohlenwasserstoffreste mit 5 bis 50 Kohlenstoffatomen;
- Polyoxyalkylengruppen der Formeln I bis IV:

$$—[(CH_2)_a—O]_b(CH_2)_a—$$

in der a 2 bis 4 und b 1 bis 100 sein kann,

**Formel II:**

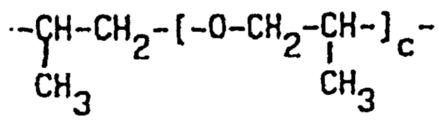

in der c 2 bis 70 sein kann,

**Formel III:**

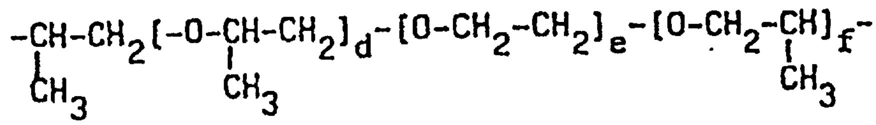

in der die Summe (d + f) 2 oder 3 und e 8-140 sein kann,

**Formel IV:**

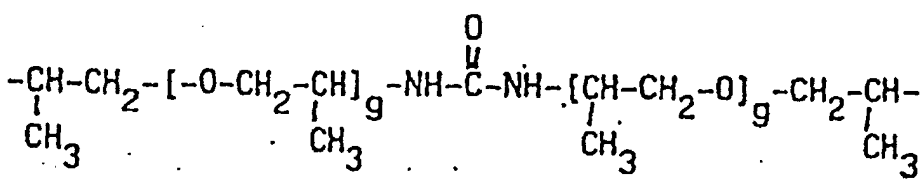

in der g 2-70 sein kann.

**6.** Klebstoffzusammensetzung nach einem oder mehreren der Ansprüche 1 bis 5, **dadurch gekennzeichnet, dass** der Anteil an Bismaleinimid am Gemisch 0,5 bis 10 Gew.-% beträgt.

**7.** Klebstoffzusammensetzung nach Anspruch 6, **dadurch gekennzeichnet, dass** der Anteil des Bismaleinimides am Gemisch 2 bis 5 Gew.-% beträgt.

**8.** Klebstoffzusammensetzung nach einem oder mehreren der Ansprüche 1 bis 7, **dadurch gekennzeichnet, dass** das Bismaleinimid ausgewählt ist aus der Gruppe bestehend aus 4,4'-Diphenylmethanbismaleinimid, m-Phenylenbismaleinimid, N,N'-Diphenyletherbismaleinimid, N,N'-Diphenylsulfonbismaleinimid, N,N'-Dicyclohexylmethanbismalimid, N,N'-Dimethylphenylenbismaleinimid, N,N'-Methylphenylbismaleinimid, N,N'-Xylylenbismaleinimid, N,N'-Diphenylcyclohexylbismaleinimid, N,N'-Dichlordiphenylbismaleinimid, N,N'-Diphenylmethanbismaleinimid, N,N'-Diphenyletherbismethylmaleinimid, N,N'-Diphenylsulfonbismethylmaleinimid, N,N'-Ethylenbismaleinimid, N,N'-Hexamethylenbismaleinimid und 6-Maleinimid-1-(4'maleinimidphenyl)-1,3,3-trimethylindan.

**9.** Klebstoffzusammensetzung nach einem oder mehreren der Ansprüche 1 bis 8, gebildet durch eine Vernetzung

mit einem konventionellen Vernetzer in der ersten Stufe, die der Nachvernetzung vorangeht.

**10.** Klebstoffzusammensetzung nach Anspruch 9, **dadurch gekennzeichnet, dass** konventionelle Vernetzer ausgewählt sind aus der Gruppe bestehend aus Chelatbildnern wie z. B. Titanacetylacetonat, Zinkchlorid, Melaminharzen, Benzoguanaminharzen, Harnstoffharzen oder Aziridinen.

**11.** Durch Nachvernetzung der Klebstoffzusammensetzung nach einem oder mehreren der Ansprüche 1 bis 10 mittels Wärmezufuhr entstandene Masse.

**12.** Masse nach Anspruch 11, **dadurch gekennzeichnet, dass** sie nach Vernetzung zwischen 25°C und 150°C eine Dämpfung von mindestens 1 % bei Frequenzen bis 12 kHz aufweist.

**13.** Verfahren zur Herstellung eines Haftklebebandes, **dadurch gekennzeichnet, dass** es unter Verwendung der vorgenannten Klebstoffzusammensetzung auf einer konventionellen Lösemittelbeschichtungsanlage mit einem Auftragsgewicht von 100 g/$m^2$ zu Transferklebebändern verarbeitet wird.

## Claims

**1.** Pressure-sensitive, high-temperature resistant and vibration-damping, thermally post-crosslinkable adhesive composition, **characterized in that** it essentially consists of a mixture of a copolymer of (meth)acrylic acid derivatives, which mixture contains primary and/or secondary amino and/or amide groups, and at least one bis-maleinimide as post-crosslinking agent.

**2.** Adhesive composition according to claim 1, **characterized in that** the copolymer contains, as comonomers, (meth) acrylic acid derivatives with primary and/or with secondary amino and/or amide groups.

**3.** Adhesive composition according to claim 1 or 2, **characterized in that** the portion of the nitrogen-carrying comonomers, relative to the copolymer, is 1 to 30%-wt.

**4.** Adhesive composition according to claim 3, **characterized in that** the portion of nitrogen-carrying comonomers, relative to the copolymer, is 10 to 15%-wt.

**5.** Adhesive composition according to one or more of claims 1 to 4, **characterized by** a bis-maleinimide of the general formula

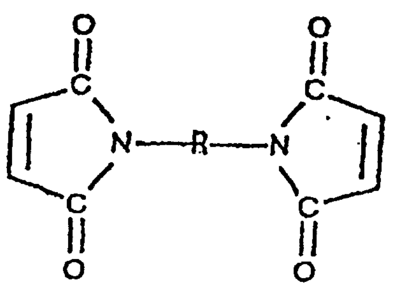

wherein R may be one of the following groups:

- straight-chain, branched and/or cycloaliphatic alkyl residues having 2 to 20 carbon atoms;
- aromatic or aromatic/aliphatic or aromatic/cycloaliphatic hydrocarbon residues having 5 to 50 carbon atoms;
- polyoxyalkylene groups of formula I to IV:

$$—[(CH_2)_a—O]_b—(CH_2)_a—$$

wherein a may be 2 to 4, and b may be 1 to 100,

**Formula II:**

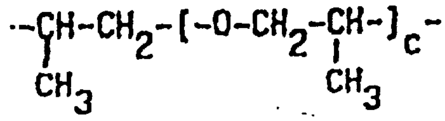

wherein c may be 2 to 70,

**Formula III:**

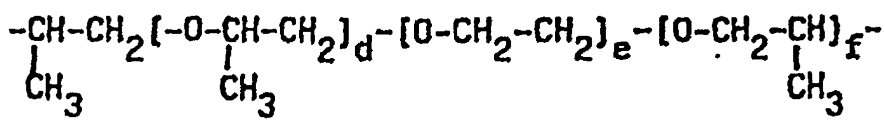

wherein the sum (d + f) may be 2 or 3, and e may be 8-140,

**Formula IV:**

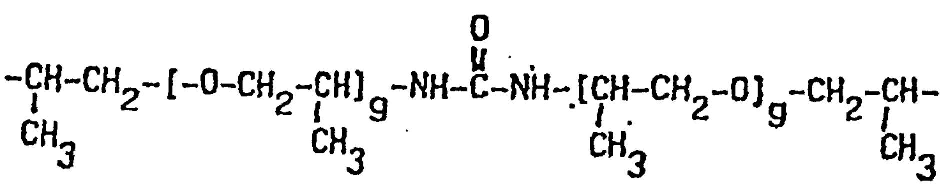

wherein g may be 2-70.

**6.** Adhesive composition according to one or more of claims 1 to 5, **characterized in that** the portion of bis-maleinimide amounts to 0.5 to 10%-wt. of the mixture.

**7.** Adhesive composition according to claim 6, **characterized in that** the portion of bismaleinimide amounts to 2 to 5%-wt. of the mixture.

**8.** Adhesive composition according to one or more of claims 1 to 7, **characterized in that** the said bis-maleinimide is selected from the group consisting of 4,4'-diphenylmethane bismaleinimide, m-phenylene bismaleinimide, N,N'-diphenylether bismaleinimide, N,N'-diphenylsulfone bismaleinimide, N,N'-dicycloheyxylmethane bismaleinimide; N,N'dimethylphenylene bismaleinimide, N,N'-methylphenyl bismaleinimide, N,N'-xylylene bismaleinimide, N,N'-diphenylcyclohexyl bismaleinimide, N,N'-dichlorodiphenyl bismaleinimide, N,N'-diphenylmethane bismaleinimide, N,N'-diphenylether bismethylmaleinimide, N,N'-diphenylsulfone bismethylmaleinimide, N,N'-ethylene bismaleinimide, N,N'-hexamethylene bismaleinimide and 6-maleinimide-1-(4'-maleinimide phenyl)-1,3,3-trimethylindane.

**9.** Adhesive composition according to one or more of claims 1 to 8, formed by crosslinking with a conventional crosslinking agent in the first stage, which stage precedes post-crosslinking.

**10.** Adhesive composition according to claim 9, **characterized in that** conventional crosslinking agents are selected from the group consisting of chelators, such as, for example, titanium acetyl acetonate, zinc chloride, melamine resins, benzoguanamine resins, urea resins or aziridines.

**11.** Material produced by post-crosslinking the adhesive composition according to one or more of claims 1 to 10 by addition of heat.

**12.** Material according to claim 11, **characterized in that**, after crosslinking between 25°C and 150°C, it has a damping

effect of at least 1%, at frequencies of up to 12 kHz.

**13.** Process for producing a pressure-sensitive adhesive tape, **characterized in that** it is processed, using the aforementioned adhesive composition, on a conventional solvent coating plant at an application weight of 100 $g/m^2$ into transfer adhesive tapes.

**Revendications**

**1.** Composition d'adhésif sensible à la pression, résistant aux hautes températures et amortissant les vibrations, apte à réticuler thermiquement, **caractérisée en ce qu'**elle est essentiellement constituée d'un mélange d'un copolymère de dérivés d'acide (méth)acrylique qui contient des groupes amino primaires et/ou secondaires et/ou des groupes amide, et d'au moins un bismaléinimide qui sert d'agent de réticulation finale.

**2.** Composition d'adhésif selon la revendication 1, **caractérisée en ce que** le copolymère contient comme comonomères des dérivés d'acide (méth)acrylique avec des groupes amino primaires et/ou secondaires resp. des groupes amide.

**3.** Composition d'adhésif selon la revendication 1 ou 2, **caractérisée en ce que** la proportion de comonomères contenant de l'azote, rapportée au copolymère, est comprise entre 1 et 30 % en poids.

**4.** Composition d'adhésif selon la revendication 3, **caractérisée en ce que** la proportion de comonomères contenant de l'azote est comprise entre 10 et 15 % en poids par rapport au copolymère.

**5.** Composition d'adhésif selon une ou plusieurs des revendications 1 à 4, **caractérisée par** un bismaléinimide de formule générale:

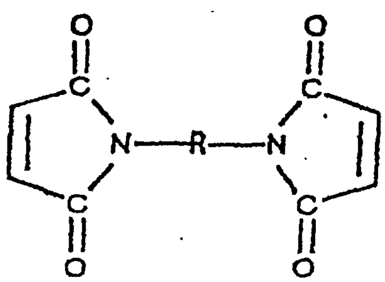

dans laquelle R peut être l'un des groupes suivants:

- un groupe alkyle à chaîne linéaire, ramifiée et/ou cycloaliphatique comptant de 2 à 20 atomes de carbone;
- des groupes hydrocarbure aromatique ou aromatique/aliphatique ou aromatique/cycloaliphatique comptant de 5 à 50 atomes de carbone;
- des groupes polyoxyalkylène des formules I à IV:

$$—[(CH_2)_a—O]_b—(CH_2)_a—$$

dans laquelle a peut représenter de 2 à 4 et b de 1 à 100,

formule II:

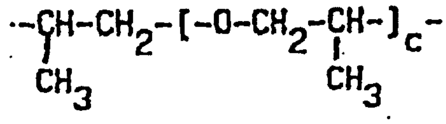

dans laquelle c peut représenter de 2 à 70,

formule III:

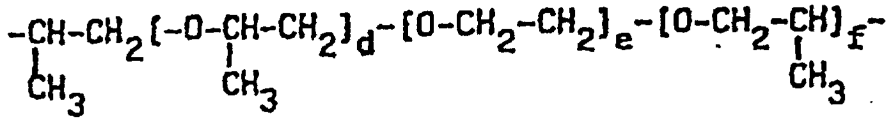

dans laquelle la somme (d + f) peut représenter 2 ou 3 et e de 8 à 140,

formule IV:

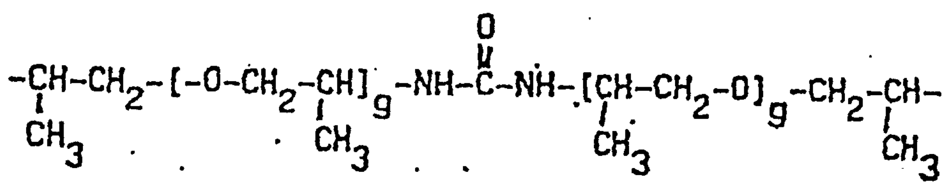

dans laquelle g peut représenter de 2 à 70.

6. Composition d'adhésif selon l'une ou plusieurs des revendications 1 à 5, **caractérisée en ce que** la teneur en bismaléinimide dans le mélange est comprise entre 0,5 et 10 % en poids.

7. Composition d'adhésif selon la revendication 6, **caractérisée en ce que** la proportion du bismaléinimide dans le mélange est comprise entre 2 et 5 % en poids.

8. Composition d'adhésif selon l'une ou plusieurs des revendications 1 à 7, **caractérisée en ce que** le bismaléinimide est sélectionné dans le groupe constitué du 4,4'-diphénylméthanebismaléinimide, du m-phénylènebismaléinimide, du N,N'-diphénylétherbismaléinimide, du N,N'-diphénylsulfonebismaléinimide, du N,N'-dicyclohexylméthanedismaléinimide, du N,N'-diméthylphénylènebismaléinimide, du N,N'-méthylphényldismaléinimide, du N,N'-xylylènebismaléinimide, du N,N'-diphénylcyclohexylbismaléinimide, du N,N'-dichlorodiphénylbismaléinimide, du N,N'-diphénylméthanebismaléinimide, du N,N'-diphénylétherbisméthylmaléinimide, du N,N'-diphénylsulfonebisméthylmaléinimide, du N,N'-éthylènebismaléinimide, du N,N'-hexaméthylènebismaléinimide et du 6-maléinimide-1-(4'-maléinimidephényl)-1,3,3-triméthylindane.

9. Composition d'adhésif selon l'une ou plusieurs des revendications 1 à 8 qui, dans la première étape qui précède la réticulation finale, est formée par réticulation avec un agent de réticulation classique.

10. Composition d'adhésif selon la revendication 9, **caractérisée en ce que** l'on sélectionne des agents de réticulation classiques dans le groupe constitué des agents chélatants, par exemple l'acétylacétonate de titane, le chlorure de zinc, les résines de mélamine, les résines de benzoguanamine, les résines d'urée ou les aziridines.

**11.** Pâte obtenue par réticulation finale, au moyen d'apport de chaleur, de la composition d'adhésif selon l'une ou plusieurs des revendications 1 à 10.

**12.** Pâte selon la revendication 11, **caractérisée en ce qu'**après réticulation entre 25°C et 150°C, elle présente un amortissement d'au moins 1 % pour des fréquences pouvant atteindre 12 kHz.

**13.** Procédé pour la fabrication d'une bande adhésive, **caractérisé en ce qu'**elle est préparée en recourant à ladite composition d'adhésif sur une installation classique d'application de solvant, en appliquant une masse de 100 g/$m^2$ pour obtenir des bandes adhésives de transfert.

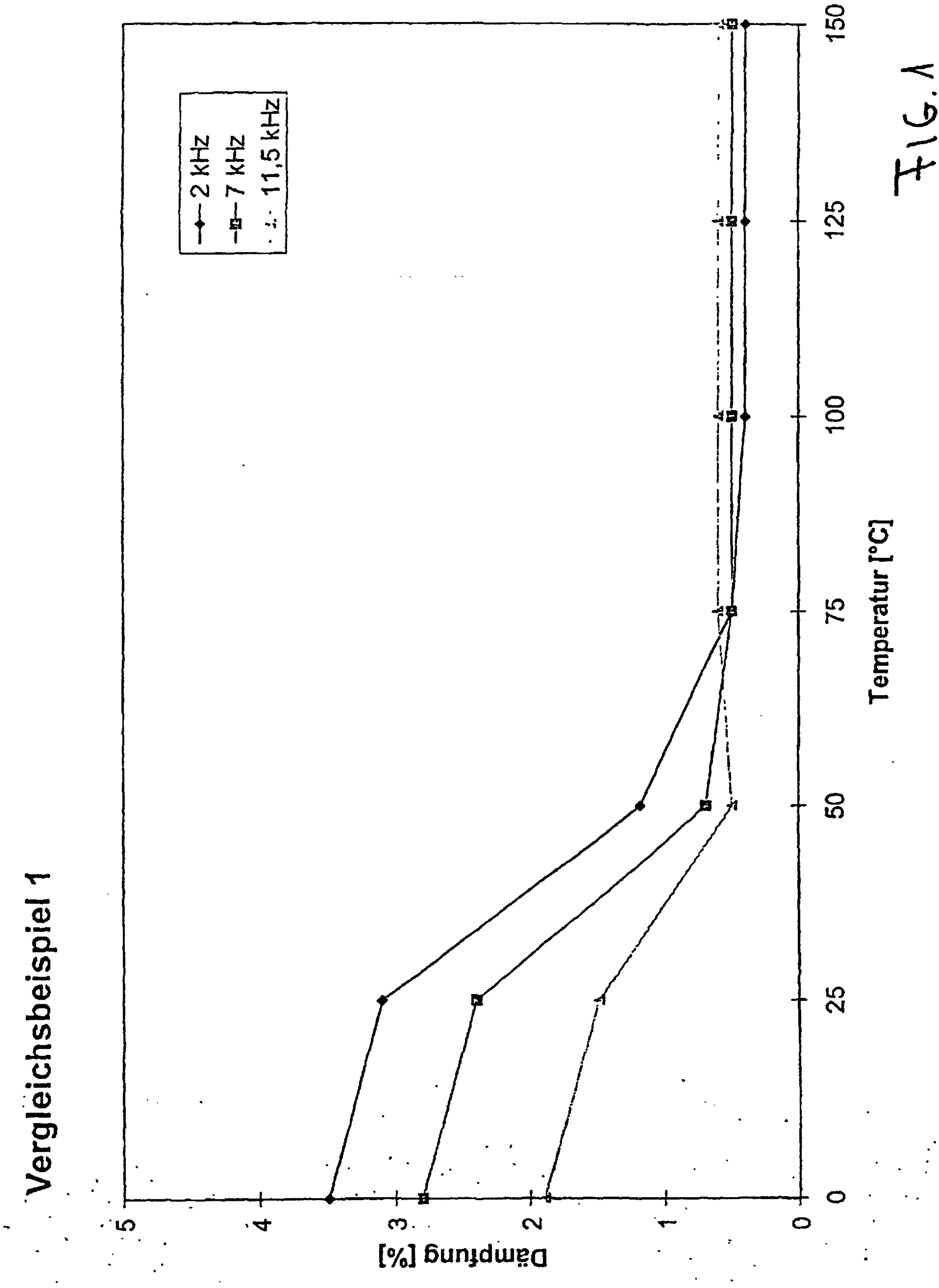
Vergleichsbeispiel 1
2 kHz
7 kHz
11,5 kHz
Dämpfung [%]
0
1
2
3
4
5
Temperatur [°C]
0
25
50
75
100
125
150

FIG. 1

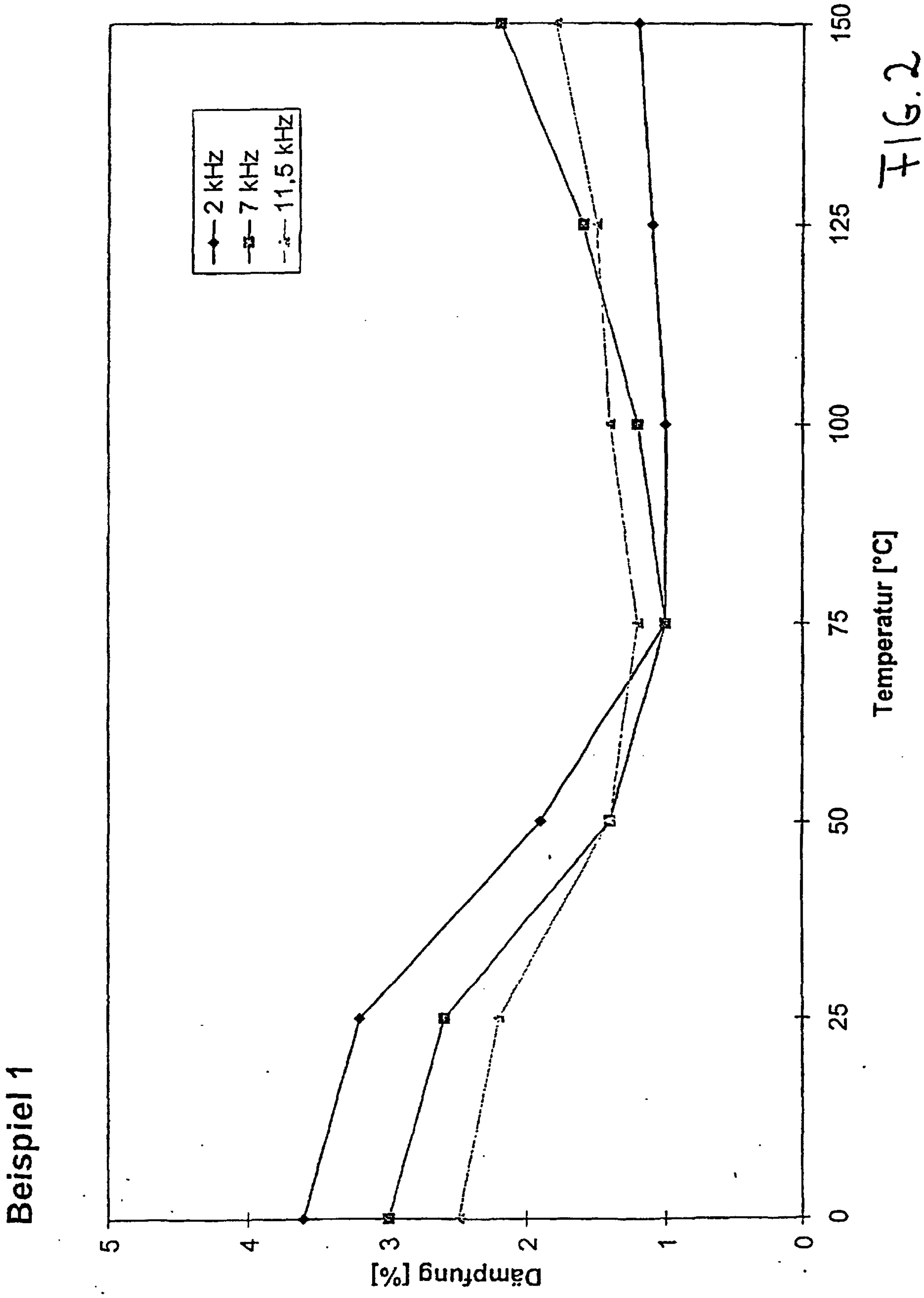
Beispiel 1
Dämpfung [%]
0
1
2
3
4
5
Temperatur [°C]
0
25
50
75
100
125
150
2 kHz
7 kHz
11,5 kHz

FIG. 2